# EUROPÄISCHE PATENTSCHRIFT

(11) **EP 1 148 098 B1**
(45) Veröffentlichungstag und Bekanntmachung des Hinweises auf die Patenterteilung: **07.05.2003**
(21) Anmeldenummer: 01103507.8
(22) Anmeldetag: 15.02.2001
(51) Int. Cl.: C08L 83/04, C08K 5/07, C08K 5/10

(54) **Selbsthaftende, additionsvernetzende Silikonelastomerzusammensetzungen**
Self-adhesive addition curable silicone elastomer compositions
Compositions d'élastomères de silicone auto-adhésives réticulantes par addition

(30) Priorität: 20.04.2000 DE 10019599
(43) Veröffentlichungstag der Anmeldung: 24.10.2001
(73) Patentinhaber: Wacker-Chemie GmbH, 81737 München (DE)
(72) Erfinder: Müller, Philipp, Dr., 84489 Burghausen (DE); Eberl, Georg, 84489 Burghausen (DE)
(74) Vertreter: Fritz, Helmut, Dr.

(56) Entgegenhaltungen:
- EP-A- 0 245 948
- EP-A- 0 286 387
- US-A- 4 855 378
- PATENT ABSTRACTS OF JAPAN vol. 018, no. 547 (C-1262), 19. Oktober 1994 (1994-10-19) & JP 06 192576 A (SHIN ETSU CHEM CO LTD), 12. Juli 1994 (1994-07-12)
- PATENT ABSTRACTS OF JAPAN vol. 2000, no. 02, 29. Februar 2000 (2000-02-29) & JP 11 323132 A (GE TOSHIBA SILICONE KK), 26. November 1999 (1999-11-26)

## Beschreibung

Die Erfindung betrifft selbsthaftende additionsvernetzende Siliconzusammensetzungen sowie daraus hergestellte additionsvernetzte Siliconelastomere und Verbundmaterialien.

Bekanntermaßen ist die Haftung additionsvernetzter Siliconelastomere auf zahlreichen Substraten, wie Kunststoffen, Metallen und Gläsern, gering, d.h., wird eine additionsvernetzende Siliconelastomermasse auf ein Substrat aufgebracht und anschließend vernetzt, kann das entstandene Siliconelastomer in der Regel problemlos, d.h. durch Anwendung geringer Zugkräfte, von der Substratoberfläche abgezogen werden; häufig wird sogar eine spontane Ablösung des Siliconelastomers vom Substrat festgestellt. Da in zahlreichen Anwendungen jedoch eine feste und dauerhafte Substrathaftung des Siliconelastomers von entscheidender Bedeutung ist, wurde eine Vielzahl spezieller Maßnahmen vorgeschlagen, um eine feste Verbindung zwischen Substrat und Siliconelastomer zu erzielen.

Grundsätzlich kann die Haftfestigkeit des Siliconelastomer-Substrat-Verbundes erhöht werden, indem die chemische und/oder physikalische Beschaffenheit des Substrates bzw. der Substratoberfläche vor dem Aufbringen der additionsvernetzenden Siliconelastomerzusammensetzung in geeigneter Weise verändert wird. Dies kann beispielsweise erfolgen durch Vorbehandlung der Substratoberfläche mit haftvermittelnden Additiven (sogenannten Primern), durch Plasmabehandlung der Substratoberfläche, durch Einmischen spezieller Zusätze in das Substrat, durch gezielte Einstellung der Morphologie des Substrates, durch Erhöhung der Oberflächenrauhigkeit etc. Diese Maßnahmen haben u.a. den Nachteil, dass zusätzliche Verfahrensschritte erforderlich werden oder spezielle Anforderungen an die Beschaffenheit des Substrates gestellt werden müssen.

Des weiteren kann die Haftfestigkeit des Siliconelastomer-Substrat-Verbundes erhöht werden, indem die chemische und/oder physikalische Beschaffenheit der additionsvernetzenden Siliconelastomermasse gezielt verändert wird. Bekannt sind zahlreiche haftvermittelnde Additive, welche - der unvernetzten Siliconmasse beigemischt - eine Selbsthaftung des resultierenden Siliconelastomers auf diversen Substraten herbeiführen. Hierzu zählen Verbindungen, die hochreaktive funktionelle Gruppen, wie Alkoxy, Epoxy, Methacryloxy etc., enthalten, wobei diese Gruppen zumeist so ausgewählt werden, dass der Haftvermittler sowohl mit dem Substrat als auch mit einem Siliconelastomerbestandteil zu reagieren vermag. Zwar kann durch derartige Haftvermittler auf eine Vorbehandlung des Substrates evtl. verzichtet werden, doch entspricht die erzielte Haftfestigkeit häufig nicht den gestellten Anforderungen, insbesondere bei den für einige wichtige Anwendungen limitierten Vulkanisationstemperaturen von unter 100°C. Auch ist eine Steigerung der Haftfestigkeit durch höhere Gehalte an diesen Haftvermittlern nur bedingt möglich, da sich die in ihm enthaltenen hochreaktiven Gruppen dann zunehmend nachteilig auf die Gebrauchseigenschaften, wie Lagerstabilität, Vernetzungscharakteristik (Inhibierung), toxikologische Unbedenklichkeit etc., auswirken; man ist aus diesen Gründen vielmehr daran interessiert, den Gehalt an Haftvermittlern so niedrig wie möglich zu halten.
Die am häufigsten eingesetzten Haftvermittler für selbsthaftende additionsvernetzende Siliconelastomere sind epoxyfunktionelle Silane, wie Glycidoxypropyltrimethoxysilan, oder methacrylatfunktionelle Silane, wie Methacryloxypropyltrimethoxysilan, oder Vinylsilane, wie Vinyltrimethoxysilan oder Kombinationen hieraus. Die für den Aufbau der Verbundfestigkeit relevanten organofunktionellen Gruppen sind jedoch bei Temperaturen von unter 100°C zu unreaktiv um ausreichende Haftung zum Substrat zu erwirken.

Bei vielen wichtigen Anwendungen von selbsthaftenden Siliconelastomeren ist die maximale Vulkanisationstemperatur limitiert, wie z.B. beim Verguß von elektronischen Schaltungen. Die temperatursensiblen Bauteile, wie Spulen, Kondensatoren oder ICs, erlauben nur sehr begrenzte thermische Belastungen ohne den Verlust der Funktion zu riskieren. Oftmals ist nur eine kurzzeitige Erwärmung auf Temperaturen von 50°C bis 80°C möglich.

US-A-5164461 und EP-A-451946 beschreiben additionsvernetzende Siliconelastomere mit Eigenhaftung auf den bei der Vulkanisation in Kontakt stehenden Substraten. Gebräuchlichste Haftvermittler sind hier epoxyd- und/oder methacrylatfunktionelle Alkoxysilane. Die Vulkanisationstemperaturen betragen mindestens 130°C. Mit den in US-A-5164461 beanspruchten maleinat- und fumaratfunktionellen Alkoxysilanadditiven wird Selbsthaftung bei Vernetzungstemperaturen von mindestens 100°C erzielt.

Beispielsweise US-A-5595826 beschreibt Haftvermittler auf Basis von Umsetzungsprodukten aus aliphatisch ungesättigten Monooder Polyalkoholen mit organofunktionellen Alkoxysilanen wie Methacryloxypropyltrimethoxysilan oder Glycidoxypropyltrimethoxysilan. Derartige Additive bewirken Selbsthaftung von additionsvernetzenden Siliconelastomeren bei Vulkanisationstemperaturen von 70 bis 100°C. Allerdings werden hohe Haftfestigkeiten ausschließlich zu metallischen und anorganischen Werkstoffsubstraten wie Stahl, Aluminium, Glas und Kupfer erzielt.

Beispielsweise US-A-5416144 und US-A-5567752 beschreiben Haftvermittler auf der Basis von Umsetzungsprodukten aus Aminen oder Aminoalkoxysilanen mit Methacryloxypropyl- oder Glycidoxypropyltrimethoxysilan. Selbsthaftung wird mit diesen Additiven bei Vulkanisationstemperaturen von 80 bis 100°C erzielt. Problematisch ist hierbei die bekannt stark inhibierende Wirkung aminhaltiger Verbindungen auf die Ptkatalysierte Vernetzungsreaktion. Des weiteren stellt der Kontakt aminhaltiger Verbindungen mit SiH-haltigen Komponenten ein großes Gefahrenpotential dar, da mit Wasserstoffbildung gerechnet werden muß. Bei Verlust von SiH-Gruppen ist zudem Untervulkanisation zu erwarten. Weiterer Nachteil solcher hochpolaren Additive ist die starke Thixotropierung der Siloxanmasse und die hiermit verbundene verminderte Fließfähigkeit.
EP-A-286387 beschreibt Organosiliziumverbindungen mit β-Ketoesterfunktion. Insbesondere werden Alkoxysilane mit mindestens einer alkylgebunden β-Ketoesterfunktion beschrieben. Zahlreiche Anwendungen derartiger Strukturen werden angegeben, u.a. als Bestandteil von Grundierungen für Epoxydharz/Glas-Verbunde.
EP-A-295657 beschreibt Metalchelatkomplexe aus z. B. Titanatomen und dem chelatisierenden Liganden Trialkoxysilylpropylacetessigester. Derartige Strukturen werden des weiteren als haftvermittelndes Additiv zu Epoxydharzformulierungen beansprucht.
US-A-5041481 beschreibt Haftvermittler aus der Umsetzung von 1,3-Diketonverbindungen mit Aminoalkylalkoxysilanen, welche u.a. als Additiv in kondensationsvernetzenden Siliconelastomeren beansprucht werden.

Zusammenfassend kann festgestellt werden, daß sämtliche beschriebenen haftvermittelnde Additive auf Basis von 1,3-Diketonverbindungen aufwendige Umsetzungen mit Alkoxysilanen zur Anbindung von Alkoxysilylfunktionen bedingen. Nachteilig sind hierbei die z.T. hochtoxischen Edukte, wie z. B. Trimethoxysilan, und die durch die Keto-/Enoltautomerie bedingt schwierige Reaktionsführung mit zahlreichen Nebenreaktionen, wie z. B. Propenabspaltung, oder Reduktion der Ketofunktion durch SiH-Gruppen. Destillative Reinigung und Isolierung der Reaktionsprodukte sind aufgrund Vergelungsreaktion der Enolgruppen der 1,3-Diketonstruktur mit Alkoxysilylgruppen unter Alkoholabspaltung nur mit massiven Ausbeuteverlusten möglich. Des weiteren sind Haftvermittler auf Basis von aminofunktionellen Alkoxysilanen aufgrund deren bekannt, stark inhibierenden Wirkung in additionsvernetzenden Siliconelastomeren nur bedingt einsetzbar.

Gegenstand der Erfindung sind selbsthaftende additionsvernetzende Siliconzusammensetzungen, die
(A) Diorganopolysiloxane der allgemeinen Formel (1)

   R¹ ₐR² _{b}SiO_{(4-a-b)/2} (1),

   in der
   - **R**^{**1**}: Hydroxylrest oder einen monovalenten, gegebenenfalls halogensubstituierten, gegebenenfalls O-, N-, S-, oder P-Atome enthaltenden Kohlenwasserstoffrest mit 1 bis 20 Kohlenstoffatomen, der frei von aliphatisch ungesättigten Gruppen ist,
   - **R**^{**2**}: einen monovalenten, aliphatisch ungesättigten, gegebenenfalls halogensubstituierten, gegebenenfalls O-, N-, S-, oder P-Atome enthaltenden Kohlenwasserstoffrest mit 2 bis 10 Kohlenstoffatomen,
   - **b**: Werte von 0,003 bis 2 bedeuten,
   mit der Maßgabe, dass 1.5<(**a**+**b**)<3.0, dass pro Molekül durchschnittlich mindestens zwei aliphatisch ungesättigte Reste **R**^{**2**} enthalten sind und dass die bei 25°C bestimmte Viskosität der Diorganopolysiloxane (A) 1 mPa.s bis 40 000 Pa.s beträgt,
(B) Organohydrogenpolysiloxane der allgemeinen Formel (2)

   R³ _{c}R⁴ _{d}R⁵ ₑH_{f}SiO_{(4-c-d-2e-f)/2} (2),

   wobei
   - **R**^{**3**}: einen monovalenten aliphatisch gesättigten Kohlenwasserstoffrest mit 1 bis 20 Kohlenstoffatomen,
   - **R**^{**4**}: (a) einen gegebenenfalls halogensubstituierten monovalenten Kohlenwasserstoffrest mit 6 bis 15 Kohlenstoffatomen, welcher mindestens einen aromatischen C₆-Ring enthält, oder (b) einen halogensubstituierten, gegebenenfalls O-, N-, S-, oder P-Atome enthaltenden gesättigten monovalenten Kohlenwasserstoffrest mit 2 bis 20 Kohlenstoffatomen,
   - **R**^{**5**}: einen beidseitig Si-gebundenen bivalenten, gegebenenfalls halogensubstituierten, gegebenenfalls O-, N-, S-, oder P-Atome enthaltenden Kohlenwasserstoffrest mit 6 bis 20 Kohlenstoffatomen und
   - **c, d, e** und **f**: positive Zahlen bedeuten, mit der Maßgabe, dass die Relationen: 0,05<100 (d+e)/(c+d+e+f)<12 erfüllt sind und dass die bei 25°C bestimmte Viskosität des Organohydrogenpolysiloxans (B) 1 mPa.s bis 100 Pa.s beträgt,
(C) mindestens einen aliphatisch ungesättigten Rest und mindestens eine β-Diketon- oder β-Ketoesterfunktion aufweisende Verbindungen der allgemeinen Formel (3):

   R⁷-CO-CHR⁸-CO-(O)_{g}-R⁹ (3),

   wobei
   - **R**^{**7**} und **R**^{**9**}: jeweils einen gleichen oder verschiedenen,
   (a) monovalenten, aliphatisch ungesättigten, gegebenenfalls halogensubstituierten, gegebenenfalls O-, N-, S-, oder P-Atome enthaltenden Kohlenwasserstoffrest mit 2 bis 12 Kohlenstoffatomen, oder
   (b) einen monovalenten aliphatisch gesättigten Kohlenwasserstoffrest mit 1 bis 20 Kohlenstoffatomen,
   - **R**^{**8**}: Wasserstoff, oder einen
   (a) monovalenten, aliphatisch ungesättigten, gegebenenfalls halogensubstituierten, gegebenenfalls O-, N-, S-, oder P-Atome enthaltenden Kohlenwasserstoffrest mit 2 bis 12 Kohlenstoffatomen, oder
   (b) einen monovalenten aliphatisch gesättigten Kohlenwasserstoffrest mit 1 bis 20 Kohlenstoffatomen,
   - **g**: die Werte 0 oder 1 bedeuten und
(D) Hydrosilylierungskatalysator enthalten.

Organohydrogenpolysiloxan (B) fungiert als Haftvermittler und zugleich als Vernetzer.

Die vorteilhaften Eigenschaften der Siliconzusammensetzungen bestehen darin, dass die Selbsthaftung durch einen ohnehin in jeder additionsvernetzenden Masse enthaltenen Bestandteil, nämlich den SiH-haltigen Vernetzer (B), in Kombination mit der β-diketon- oder β-ketoesterfunktionellen Verbindung (C), erzielt wird, wobei der SiH-Vernetzer (B) lediglich einige Gruppen enthalten muß, welche die Verträglichkeit mit den übrigen Bestandteilen der Masse (vor allem mit dem Diorganopolysiloxan) herabsetzen. Diese Gruppen stellen zudem keine reaktiven funktionellen Gruppen dar, sondern sind vorzugsweise Phenylgruppen, wodurch die toxikologische Unbedenklichkeit der Masse (z. B. Trinkwasserzulassung; BGA/FDA-Zulassung) bewahrt bleibt, keine Vulkanisationsstörungen auftreten, ausreichende Lagerstabilität gegeben ist, die Transparenz des vernetzten Siliconelastomers bewahrt bleibt und keine ausschwitzenden oder extrahierbaren Bestandteile zugesetzt werden. Die Kombination des vermindert verträglichen SiH-Vernetzers (B) mit einer β-diketon- oder β-ketöester- und alkenylfunktionellen Verbindung (C) macht es möglich, erstens, den Gehalt an unverträglichen Gruppen im SiH-Vernetzer niedrig zu halten und zweitens, die haftvermittelnde Wirksamkeit der β-diketon- oder β-ketoester- und alkenylfunktionellen Verbindung (C) auch bei relativ niedriger SiH-Funktionalität des SiH-Vernetzers zu erzielen. Erst die Kombination beider Bestandteile (B) und (C)führt zur Synergie der Selbsthaftungseffekte dieser beiden Bestandteile.

Insbesondere zeichnet sich die vorliegende Zusammensetzung dadurch aus, dass
a) Haftung auf verschiedenen Werkstoffsubstraten wie PBT, PA6, PA66, PPS, sowie Stahl, Aluminium und Glas bei Vulkanisationstemperaturen von unter 100°c erzielt wird,
b) die Vernetzungsgeschwindigkeit kaum vermindert wird
c) die Transparenz der vernetzten Siliconelastomere nicht beeinträchtigt wird,
d) keine nachteiligen Veränderungen der mechanischen Elastomereigenschaften in Kauf genommen werden müssen,
e) der haftvermittelnde Bestandteil (B) zugleich als Vernetzer fungiert,
f) auch auf Metallen eine starke Selbsthaftung erzielt werden kann, ohne die Entformbarkeit aus metallenen Vulkanisationsformen zu verhindern (es zeigt sich, daß die Haftung auf Metall kurz nach der Vernetzung eine Entformung des Siliconelastomerteiles erlaubt; wird der Siliconelastomer-Metall-Haftverbund jedoch gelagert, wächst das Siliconelastomer innerhalb kurzer Zeit fest und dauerhaft auf die Metalloberfläche auf),
g) die Fließfähigkeit der unvernetzten Masse kaum beeinträchtigt wird.

Der haftvermittelnde Bestandteil (B) der vorliegenden Erfindung weist zwar auch eine verminderte Verträglichkeit mit den übrigen Bestandteilen der Masse auf, was an einer Trübung beim Einmischen erkennbar ist, doch verschwindet diese Trübung vollständig, sobald die Masse zum Zwecke der Vernetzung erwärmt wird; dies indiziert eine homogene Verteilung der Vernetzermoleküle in der Masse zum Zeitpunkt der Vernetzung.

Der zweite haftvermittelnde Bestandteil (C) der vorliegenden Erfindung enthält eine β-Diketofunktion oder β-Ketoesterfunktion. Diese 1,3-Diketonstruktur ist sowohl in β-Diketonen als auch in β-Ketoestern, wie z.B. Acetessigestern enthalten. Diese 1,3-Diketonstruktur führt den Aufbau der Haftung bei niederen Vulkanisationstemperatur herbei. Hierfür werden starke dipolare Wechselwirkungen der 1,3-Diketofunktion oder Wasserstoffbrückenbindungen der Enolform des Additivs mit polaren Gruppen der Substrate verantwortlich gemacht. Die Verankerung der mit dem Substrat wechselwirkenden β-Diketofunktion in das Siloxannetzwerk wird durch den einer Hydrosilylierungsreaktion mit dem SiH-Vernetzer zugänglichen aliphatisch ungesättigten Rest gesichert. Die Synergie der Bestandteile (B) und (C) besteht in dem, durch die Unverträglichkeit mit der Siloxanmasse herbeigeführten Migrationsverhalten des SiH-Vernetzers an die Grenzfläche Siloxan/Substrat, so dass für die, für den Aufbau der Haftung essentiellen Einvernetzung der mit dem Substrat wechselwirkenden β-Diketofunktion über Hydrosilylierung, ausreichend SiH-Funktionen des Vernetzers in der Laminatgrenzschicht vorhanden sind.

Die Komponenten (A), (B) und (C) können eine Verbindung oder eine Mischung verschiedener Verbindungen enthalten.

Beispiele für die Reste **R**^{**1**} sind Alkylreste, wie Methyl-, Ethyl-, Propyl-, Isopropyl-, tert.-Butyl-, n-Pentyl-, iso-Pentyl-, neo-Pentyl-, tert.-Pentyl-, n-Octyl-, 2-Ethylhexyl-, 2,2,4-Trimethylpentyl-, n-Nonyl- und Octadecylrest; Cycloalkylreste, wie Cyclopentyl-, Cyclohexyl-, Cycloheptyl-, Norbornyl-, Adamantylethyl- oder Bornylrest; Aryl- oder Alkarylreste, wie Phenyl-, Ethylphenyl-, Tolyl-, Xylyl-, Mesityl- oder Naphthylrest; Aralkylreste, wie Benzyl-, 2-Phenylpropyl- oder Phenylethylrest, sowie halogenierte und mit organischen Gruppen funktionalisierte Derivate der voranstehenden Reste, wie 3,3,3-Trifluorpropyl-, 3-Iodopropyl-, 3-Isocyanatopropyl-, Aminopropyl-, Methacryloxymethyl- oder Cyanoethylrest. Bevorzugte Reste **R**^{**1**} enthalten 1 bis 10 Kohlenstoffatome sowie gegebenenfalls Halogensubstituenten. Besonders bevorzugte Reste **R**^{**1**} sind Methyl-, Phenyl- und 3,3,3-Trifluorpropylrest, insbesondere der Methylrest.

Die Reste **R**^{**2**} sind einer Hydrosilylierungsreaktion zugänglich. Beispiele hierfür sind Alkenyl- und Alkinylreste, wie Vinyl-, Allyl-, Isopropenyl-, 3-Butenyl-, 2,4-Pentadienyl-, Butadienyl-, 5-Hexenyl-, Undecenyl-, Ethinyl-, Propinyl- und Hexinylrest; Cycloalkenylreste, wie Cyclopentenyl-, Cyclohexenyl-, 3-Cyclohexenylethyl-, 5-Bicycloheptenyl-, Norbornenyl-, 4-Cyclooctenyl- oder Cyclooctadienylrest; Alkenylarylreste, wie Styryl- oder Styrylethylrest, sowie halogenierte und Heteroatome enthaltende Derivate der voranstehenden Reste, wie 2-Bromvinyl-, 3-Brom-1-propinyl-, 1-Chlor-2-methylallyl-, 2-(Chlormethyl)allyl-, Styryloxy-, Allyloxypropyl-, 1-Methoxyvinyl-, Cyclopentenyloxy-, 3-Cyclohexenyloxy-, Acryloyl-, Acryloyloxy-, Methacryloyl- oder Methacryloyloxyrest. Bevorzugte Reste **R**^{**2**} sind Vinyl-, Allyl- und 5-Hexenylrest, insbesondere der Vinylrest.

Bei den Diorganopolysiloxanen (A) der allgemeinen Formel (1) beträgt die bei 25°C bestimmte Viskosität vorzugsweise 100 mPa.s bis 30 000 Pa.s. Besonders bevorzugt ist der Viskositätsbereich von 1 bis 30 000 Pa.s. Je nach Art der additionsvernetzenden Masse, werden unterschiedliche Viskositätsbereiche besonders bevorzugt. Für die als RTV-2 (room temperature vulcanizing) bekannten Massen werden Viskositäten von 100 bis 10 000 mPa.s besonders bevorzugt, für LSR (liquid silicone rubber) von 1 bis 100 Pa.s, für HTV (high temperature vulcanizing) von 2 000 bis 40 000 Pa.s.

Beispiele für **R**^{**3**} sind Alkylreste, wie Methyl-, Ethyl-, Propyl-, Isopropyl-, tert.-Butyl-, n-Octyl-, 2-Ethylhexyl- und Octadecylrest, sowie Cycloalkylreste, wie Cyclopentyl-, Cyclohexyl-, Norbornyl- oder Bornylrest. Bevorzugte Reste **R**^{**3**} sind Kohlenwasserstoffreste mit 1 bis 10 Kohlenstoffatomen. Besonders bevorzugter Rest **R**^{**3**} ist der Methylrest.

Beispiele für **R**^{**4**} (a) sind der Phenyl-, Tolyl-, Xylyl-, Biphenylyl-, Anthryl-, Indenyl-, Phenanthryl-, Naphthyl-, Benzyl-, Phenylethyl- oder Phenylpropylrest, sowie halogenierte und mit organischen Gruppen funktionalisierte Derivate der voranstehenden Reste, wie o-, m-, p-Chlorphenyl-, Pentafluorphenyl-, Bromtolyl-, Trifluortolyl-, Phenoxy-, Benzyloxy-, Benzyloxyethyl-, Benzoyl-, Benzoyloxy-, p-tert.-Butylphenoxypropyl-, 4-Nitrophenyl-, Chinolinyl- oder Pentafluorbenzoyloxyrest.
Beispiele für Kohlenwasserstoffreste **R**^{**4**} (b) mit 2 bis 20 Kohlenstoffatomen sind 3-Chlorpropyl-, 3-Brompropyl-, 3,3,3-Trifluorpropyl-, 2-Fluorethyl-, 1,1-Dihydroperfluordodecyloder der 2-Cyanoethylrest. Besonders bevorzugte Reste **R**^{**4**} sind der Phenylrest und der 3,3,3-Trifluorpropylrest.

Bevorzugte Reste **R**^{**5**} entsprechen der allgemeinen Formel (4)

-(O)ₛ-(R⁶)ₜ-(O)ᵤ-(X)_{w}-(O)ᵤ-(R⁶)ₜ-(O)ₛ-, (4),

wobei
- **s, t, u** und **w**: unabhängig voneinander die Werte 0, 1 oder 2,
- **R**^{**6**}: gleich oder verschieden sein können und einen bivalenten, gegebenenfalls halogensubstituierten, gegebenenfalls O-, N-, S-, oder P-Atome enthaltenden Kohlenwasserstoffrest, der frei ist von aliphatisch ungesättigten Gruppen und 1 bis 10 Kohlenstoffatome enthält, wie -CH₂-, -CH₂-CH₂-, -CH₂-CH₂-CH₂-, -CF₂-, -CH₂-CF₂-, -CH₂-CH(CH₃)-, -C(CH₃)₂-, -CH₂-C(CH₃)₂-CH₂-, -C(CH₃)₂-CH₂-, -CH₂-CH₂-O- oder -CF₂-CF₂-O-,
- **-(X)-**: einen bivalenten Rest, welcher ausgewählt wird aus -Ph-, -Ph-O-Ph-, -Ph-S-Ph-, -Ph-SO₂-Ph-, -Ph-C(CH₃)₂-Ph-, -Ph-C(CF₃)₂-Ph-, -Ph-C(O)-Ph-, Cyclohexylen oder Norbornylen, wobei -Ph- eine Phenylengruppe bezeichnet, bedeuten.

Besonders bevorzugter Rest **R**^{**5**} ist der Phenylenrest.

Das Organohydrogenpolysiloxan (B) enthält pro Molekül vorzugsweise 5 bis 50 SiH-Gruppen, insbesondere 8 bis 25 SiH-Gruppen. Die bei 25°C gemessene Viskosität des Bestandteils (B) beträgt vorzugsweise 2 mPa.s bis 1 Pa.s.

Aufgrund der Labilität der SiH-Gruppe kann der Bestandteil (B) herstellungsbedingt einen geringen Gehalt, typischerweise <100 Gew.-ppm, Si-gebundener OH-Gruppen aufweisen.

Mindestens einer der Reste **R**^{**7**}**, R**^{**8**} und **R**^{**9**} in Verbindung (C) ist aliphatisch ungesättigt und einer Hydrosilylierungsreaktion zugänglich. Beispiele für aliphatisch ungesättigte Reste (a) sind Alkenyl- und Alkinylreste, wie Vinyl-, Allyl-, Isopropenyl-, 3-Butenyl-, 2,4-Pentadienyl-, Butadienyl-, 5-Hexenyl-, Undecenyl-, Ethinyl-, Propinyl- und Hexinylrest; Cycloalkenylreste, wie Cyclopentenyl-, Cyclohexenyl-, 3-Cyclohexenylethyl-, 5-Bicycloheptenyl-, Norbornenyl-, 4-Cyclooctenyl- oder Cyclooctadienylrest; Alkenylarylreste, wie Styryl- oder Styrylethylrest, sowie halogenierte und Heteroatome enthaltende Derivate der voranstehenden Reste, wie Vinyloxy-, Allyloxy-, 5-Hexenyloxy-, 2-Bromvinyl-, 3-Brom-1-propinyl-, 1-Chlor-2-methylallyl-, 2-(Chlormethyl)allyl-, Styryloxy-, Allyloxypropyl-, 1-Methoxyvinyl-, Cyclopentenyloxy-, 3-Cyclohexenyloxy-, Acryloyl-, Acryloyloxy-, Methacryloyl- oder Methacryloyloxyrest.
Bevorzugte aliphatisch ungesättigte Reste sind Vinyloxy-, Allyloxy- und 5-Hexenyloxyrest, insbesondere der Allyloxyrest.

Beispiele für aliphatisch gesättigte Kohlenwasserstoffreste **R**^{**7**}**, R**^{**8**} oder **R**^{**9**} (b) sind Alkylreste, wie Methyl-, Ethyl-, Propyl-, Isopropyl-, tert.-Butyl-, n-Pentyl-, iso-Pentyl-, neo-Pentyl-, tert.-Pentyl-, n-Octyl-, 2-Ethylhexyl-, 2,2,4-Trimethylpentyl-, n-Nonyl- und Octadecylrest; Cycloalkylreste, wie Cyclopentyl-, Cyclohexyl-, Cycloheptyl-, Norbornyl-, Adamantylethyl- oder Bornylrest; Aryl- oder Alkarylreste, wie Phenyl-, Ethylphenyl-, Tolyl-, Xylyl-, Mesityl- oder Naphthylrest; Aralkylreste, wie Benzyl-, 2-Phenylpropyl- oder Phenylethylrest, sowie halogenierte, oder Heteroatome enthaltende, oder mit organischen Gruppen funktionalisierte Derivate der voranstehenden Reste. Bevorzugte Reste enthalten 1 bis 10 Kohlenstoffatome sowie gegebenenfalls Halogensubstituenten. Bevorzugte aliphatisch gesättigte Reste sind Methyl-, Ethyl-, Propyl-, und Butylrest. Besonders bevorzugter Rest ist der Methylrest.

Beispiele für den Rest **R**^{**8**} sind weiterhin Wasserstoff, oder ein aliphatisch ungesättigter oder aliphatisch gesättigter Rest wie oben definiert wurde.
Bevorzugter Rest **R**^{**8**} ist Wasserstoff.

Vorzugsweise bedeutet **g** in der allgemeinen Formel (3) den Wert 1, d.h., Verbindung (C) ist ein Ketoester. Als Verbindung (C) besonders bevorzugt ist Acetessigsäureallylester.

Die Reste **R**^{**1**} bis **R**^{**9**} können in allen vorstehenden Formeln gleich oder verschieden sein. Als Heteroatome sind bevorzugt N, O, S. Als Halogensubstituenten sind bevorzugt F, Cl, Br.

Auf 100 Gew.-Teile Diorganopolysiloxan (A) werden vorzugsweise 0,1 bis 50 Gew.-Teile, insbesondere 0,5 bis 10 Gew.-Teile Organohydrogenpolysiloxan (B) und 0,1 bis 10 Gew.-Teile, insbesondere 0,3 bis 3 Gew.-Teile Verbindung (C) eingesetzt.

Hydrosilylierungskatalysator (D) dient als Katalysator für die als Hydrosilylierung bezeichnete Additionsreaktion zwischen den aliphatisch ungesättigten Kohlenwasserstoffresten **R**^{**2**} der Diorganopolysiloxane (A) und den siliciumgebundenen Wasserstoffatomen der Organohydrogenpolysiloxane (B). In der Literatur sind zahlreiche geeignete Hydrosilylierungskatalysatoren beschrieben. Prinzipiell können alle dem Stand der Technik entsprechenden und in additionsvernetzenden Siliconkautschukmassen eingesetzten Hydrosilylierungskatalysatoren verwendet werden.

Als Hydrosilylierungskatalysator (D) können Metalle und deren Verbindungen, wie Platin, Rhodium, Palladium, Ruthenium und Iridium, vorzugsweise Platin, eingesetzt werden. Die Metalle können gegebenenfalls auf feinteiligen Trägermaterialien, wie Aktivkohle, Metalloxiden, wie Aluminiumoxid oder Siliciumdioxid, fixiert sein.
Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂.Olefin)₂ und H(PtCl₃.Olefin) verwendet werden, wobei bevorzugt Alkene mit 2 bis 8 Kohlenstoffatomen, wie Ethylen, Propylen, Isomere des Butens und Octens, oder Cycloalkane mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Auch Platin-Katalysatoren mit Phosphor-, Schwefel- und Aminliganden können verwendet werden, z. B. (Ph₃P)₂PtCl₂. Besonders bevorzugt sind Komplexe des Platins mit Vinylsiloxanen, wie sym-Divinyltetramethyldisiloxan.

Die Menge des eingesetzten Hydrosilylierungskatalysators (D) richtet sich nach der gewünschten Vernetzungsgeschwindigkeit sowie ökonomischen Gesichtpunkten. Üblicherweise werden pro 100 Gew.-Teile Diorganopolysiloxane (A) vorzugsweise 1 x 10⁻⁵ bis 5 x 10⁻² Gew.-Teile, insbesondere 1 x 10⁻³ bis 1 x 10⁻² Gew.-Teile Platin-Katalysatoren, berechnet als Platin-Metall eingesetzt.

Die selbsthaftenden additionsvernetzenden

Siliconzusammensetzungen können gegebenenfalls weitere Bestandteile (E), wie Füllstoffe, Inhibitoren, Stabilisatoren, Pigmente, und Katalysatoren enthalten. Insbesondere wird zum Aufbau von kohäsiver Haftung auf Aluminum- und Stahlsubstraten die zusätzliche Zugabe von Organotitan- oder Organozirkoniumverbindungen, wie z.B. Titantetrabutylat oder Zirkontetrabutylat beansprucht.

Um eine ausreichend hohe mechanische Festigkeit des vernetzten Siliconkautschuks zu erzielen, ist es bevorzugt, aktiv verstärkende Füllstoffe als Bestandteil (F) in die additionsvernetzenden Siliconzusammensetzungen einzuarbeiten. Als aktiv verstärkende Füllstoffe (F) werden vor allem gefällte und pyrogene Kieselsäuren, sowie Gemische derselben verwendet. Die spezifische Oberfläche dieser aktiv verstärkenden Füllstoffe sollte mindestens 50 m²/g betragen oder vorzugsweise im Bereich von 100 bis 400 m²/g gemäß der Bestimmung nach der BET-Methode liegen. Derartige aktiv verstärkende Füllstoffe sind auf dem Gebiet der Siliconkautschuke sehr gut bekannte Materialien.

Die Compoundierung der selbsthaftenden additionsvernetzenden Siliconzusammensetzungen erfolgt durch Mischen der oben aufgeführten Komponenten in beliebiger Reihenfolge.
Die Vernetzung der selbsthaftenden, additionsvernetzenden Siliconzusammensetzungen erfolgt vorzugsweise durch Erwärmen, vorzugsweise bei 30 bis 250°C, bevorzugt zwischen 50°C und 80°C.

Gegenstand der Erfindung sind auch die additionsvernetzten Siliconelastomere.

Die Siliconzusammensetzungen können mit einem Substrat verbunden werden, indem die Siliconzusammensetzungen auf das Substrat aufgebracht und anschliessend vorzugsweise durch Erwärmen auf 30 bis 250°C zu einem Verbundmaterial vernetzt werden.

Die selbsthaftenden additionsvernetzenden Siliconzusammensetzungen können insbesondere überall dort mit Vorteil eingesetzt werden, wo eine gute Haftfestigkeit zwischen dem additionsvernetzten Siliconelastomer und einem Substrat, vorzugsweise bestehend aus organischen Kunststoffen, Metallen oder Gläsern, erwünscht wird und die Vulkanisationstemperatur auf Temperaturen von höchstens 100°C, insbesondere höchstens 80°C limitiert ist. Das Substrat kann als Formteil, Folie oder Beschichtung vorliegen.
Die selbsthaftenden additionsvernetzenden Siliconzusammensetzungen eignen sich zur Herstellung von Verbundmaterial durch Beschichten, Verkleben, Vergießen und zur Herstellung von Formartikeln. Insbesondere eignen sich die selbsthaftenden additionsvernetzenden Siliconzusammensetzungen zum Verguß und zum Verkleben elektrischer und elektronischer Teile sowie zur Herstellung von Verbundformteilen. Unter Verbundformteilen wird hier ein einheitlicher Formartikel aus einem Verbundmaterial verstanden, der aus einem aus den Siliconzusammensetzungen hergestelltem Siliconelastomerteil und mindestens einem Substrat so zusammengesetzt ist, daß zwischen beiden Teilen eine feste, dauerhafte Verbindung besteht. Vorzugsweise erfolgt die Herstellung eines solchen Verbundformteiles, indem ein organischer Kunststoff zu einem Formartikel verarbeitet wird und anschließend die Siliconzusammensetzungen mit diesem Formteil in Verbindung gebracht und vernetzt werden, was z. B. im Spritzgußverfahren, mittels Extrusion oder im sog. pressmoulding-Verfahren erfolgen kann. Verbundmaterialien und insbesondere Verbundformteile können in vielfältigsten Anwendungsbereichen zum Einsatz kommen, z. B. in der Elektronik- Haushaltgeräte-, Gebrauchsgüter-, Bau- und Automobilindustrie, in der Medizintechnik, der Sport- und Freizeitartikelherstellung etc.

In den nachfolgenden Beispielen sind, falls jeweils nicht anders angegeben,
a) alle Drücke 0,10 MPa (abs.);
b) alle Temperaturen 20° C.

### Beispiele:

### Substrate

Die Haftung der erfindungsgemäßen sowie nicht erfindungsgemäßen additionsvernetzten Siliconelastomere wurde auf folgenden Substraten getestet:
a) Polybutylenterephthalat (PBT): Ultradur® B4300G6 (BASF AG; 30% GF)
b) Polyamid 6 (PA6): Durethan® BKV30 (Bayer AG; 30%GF)
c) Polyamid 66 (PA66): Durethan AKV30® (Bayer AG; 30%GF)
d) Aluminium (Industriequalität; nicht grundiert)
e) Stahl: VA-Stahl (Industriequalität)

### Charakterisierung der Haftung (Beispiele 3-10)

Zur Charakterisierung der Haftfestigkeit werden 100,0 g einer SiH vernetzerfreien additionsvernetzenden Flüssigsiliconelastomermasse, die 71.6 Gew.-% Diorganopolysiloxan der Viskosität 20000 mPa.s und 28.4 Gew.-% verstärkenden Füllstoff enthält und bei der Fa. Wacker-Chemie GmbH unter der Bezeichnung ELASTOSIL® LR 3003/40 A erhältlich ist, mit den in Tabelle 1 vorgegebenen Mengen der gemäß nachfolgender Beispiele hergestellten Vernetzer und gegebenenfalls weiteren haftungsvermittelnden Additiven innig vermischt und anschließend unter Vakuum bei Raumtemperatur entgast. Die Ergebnisse der Haftungsmessungen sind in Tabelle 2 angegeben
In eine Edelstahlpreßform wird ein Substratstreifen der Abmessungen 60x20x2mm eingelegt und die Form mit der zu testenden additionsvernetzenden Siliconelastomermasse gefüllt. Die drucklose Vulkanisation erfolgt während 60 min bei einer Temperatur von 80°C. Nach Entnahme des Laminates wird der starre Substratkörper fest eingespannt und die maximale Trennkraft bestimmt, die notwendig ist, den anhaftenden Siliconelastomerstreifen im Schälversuch abzulösen. Die Bestimmung der Trennkraft erfolgt gemäß DIN 53531 und wird in N/mm angegeben. Je Beispiel werden 5 Laminate gemessen, die maximale Trennkraft als Mittelwert bestimmt und der Anteil an kohäsivem Versagen in Prozent ermittelt. Kohäsives Versagen von 0% bedeutet, dass das Siliconelastomer vollständig und rückstandsfrei von der Substratoberfläche abgelöst wurde. Kohäsives Versagen von 100% bedeutet, dass die Delaminierung ausschließlich durch Rißwachstum innerhalb des Siliconelastomers erfolgte.

### Beispiel 1, (Vernetzer 1; erfindungsgemäß):

In einem Rührwerk werden 5,0 kg eines Trimethylsiloxy-endständigen Methylhydrogenpolysiloxanes, Me₃Si-(-O-SiH(Me))ₙ-O-SiMe₃, das gemäß ²⁹Si-NMR eine zahlenmittlere Kettenlänge von n=53 besitzt, und 5,0 kg eines Trimethylsiloxy-endständigen Siloxan-Copolymers, bestehend aus Dimethylsiloxy- und Methylphenylsiloxy-Einheiten im Molverhältnis 15,2 : 21,8 und einer bei 25°C gemessenen Viskosität von 100 mPa.s , vorgelegt. Unter fortwährendem Rühren werden bei Raumtemperatur 1,8 g Phosphornitrilchlorid, hergestellt nach US-A-4,203,913 zugegeben. Nach Anlegen eines Vakuums von <20 mbar wird 5 min gerührt und anschließend das Vakuum mit N₂ gebrochen. Anschließend wird 2 h bei einer Temperatur von 100°C gerührt. Man gibt 14 g Hexamethyldisilazan zu und rührt weitere 15 min. Abschließend wird ein Vakuum von <10 mbar angelegt, die Mischung unter fortwährendem Rühren 1 h bei 100°C von flüchtigen Bestandteilen befreit, das Vakuum mit N₂ gebrochen, auf Raumtemperatur abgekühlt und das Reaktionsprodukt filtriert. Man erhält ein Trimethylsiloxy-endständiges Polyorganosiloxan, das aus -O-Si(Me)₂-, -O-SiH(Me)- und -O-Si(Me)Ph- Einheiten im Molverhältnis 15,2 : 63,0 : 21,8 zusammengesetzt ist, und bei 25°C eine Viskosität von 32,1 mm²/s aufweist. Das Produkt enthält durchschnittlich 17 Si-H-Gruppen je Molekül.

### Beispiel 2 (Vernetzer 2; nicht erfindungsgemäßes Vergleichsbeispiel) :

Statt des in Beispiel 1 beschriebenen phenylhaltigen Vernetzers wird ein Trimethylsiloxy-endständiges Polyorganosiloxan eingesetzt, welches lediglich -O-Si(Me)₂-, und -O-SiH(Me)-Einheiten im Molverhältnis 29 : 71 enthält und eine Viskosität bei 25°C von 30 mm²/s aufweist; dieser Vernetzer enthält durchschnittlich 33 Si-H-Gruppen je Molekül.

### Beispiele 3-11 :

Die Zusammensetzung entspricht der in Tabelle 1 beschriebenen Siliconelastomermasse. Die Einsatzmenge an SiH-Vernetzer stellen sicher, daß die gemäß Beispiel 1 und Beispiel 2 hergestellten additionsvernetzenden Siliconelastomermassen den gleichen Gehalt an Si-gebundenem Wasserstoff aufweisen. Die Ergebnisse der Haftungsmessungen sind in Tab. 1 angegeben. Die jeweiligen Ergebnisse der Haftungsmessungen sind in Tabelle 2 angegeben.

**Tabelle 1:**

| Zusammensetzung der Beispiele 3-11: | | | | | |
|---|---|---|---|---|---|
| **Beispiel** | **Vernetzer 1** | **Vernetzer 2** | **Acetessigsäureallyleste** | **Titantetrabutylat.** | **Glycidoxypropyltrimethoxysilan** |
| | **[g]** | **[g]** | **[g]** | **[g]** | **[g]** |
| **3** | **1.5** | **-** | **-** | **-** | **-** |
| **4** | **-** | **1.0** | **-** | **-** | **-** |
| **5** | **1.5** | **-** | **0.3** | **-** | **-** |
| **6** | **1.5** | **-** | **0.5** | **-** | **-** |
| **7** | **-** | **1.0** | **0.5** | **-** | **-** |
| **8** | **1.5** | **-** | **0.5** | **0.1** | |
| **9** | **1.5** | **-** | **0.5** | **0.3** | |
| **10** | **1.5** | **-** | **-** | **-** | **0.5** |
| **11** | **-** | **1.0** | **-** | **-** | **0.5** |

**Tabelle 2:**

| Abrißkraft auf Substrat in [N/mm]; Anteil kohäsives Versagen in [%]) | | | | | |
|---|---|---|---|---|---|
| **Beispiel** | **PBT** | **PA6** | **PA66** | **Stahl** | **Aluminium** |
| | **[N/mm] / [%]** | **[N/mm] / [%]** | **[N/mm] / [%]** | **[N/mm] / [%]** | **[N/mm] / [%]** |
| **3** | **1.5 / 0** | **3.3 / 0** | **2.5 / 0** | **1.4 / 0** | **1.8 /0** |
| **4** | **0.3 / 0** | **0.8 / 0** | **1.0 / 0** | **0.3 / 0** | **0.5 / 0** |
| **5** | **9.5 / 40** | **10.1 / 50** | **8.9 / 30** | **3.2 / 0** | **1.2 / 0** |
| **6** | **8.6 / 80** | **12.7 /80** | **9.9 / 90** | **4.1 / 0** | **1.5 / 0** |
| **7** | **0.5 / 0** | **4.7 / 0** | **3.9 / 0** | **1.1 / 0** | **0.4 / 0** |
| **8** | **13.5 / 100** | **11.1 / 80** | **8.7 / 80** | **5.5 / 0** | **5.4 / 0** |
| **9** | **10.4 / 100** | **10.0 / 70** | **6.8 / 70** | **5.8 / 30** | **7.3 / 30** |
| **10** | **2.7 / 0** | **6.0 / 0** | **3.7 / 0** | **2.5 / 0** | **1.4 / 0** |
| **11** | **0.4 / 0** | **1.0 / 0** | **0.6 / 0** | **1.1 / 0** | **0.3 / 0** |

Die in Tabelle 2 angegebenen Werte belegen die hohe Haftfestigkeit zwischen dem erfindungsgemäßen additionsvernetzten Siliconelastomer (Beispiele 5, 6, 8 und 9) und diversen organischen Kunststoffen bzw. Metallen. Wie anhand des Beispiels 7 zu ersehen ist, führt das alleinige Vorhandensein des erfindungsgemäßen Bestandteils (C) (z.B. Acetessigsäureallylester) nicht zu einer hohen Haftfestigkeit, sondern nur in Verbindung mit Bestandteil (B). Wie anhand des Beispiels 1 zu ersehen ist, führt auch das alleinige Vorhandensein des Bestandteils (B) nicht zu einer hohen Haftfestigkeit, sondern nur in Verbindung mit einem erfindungsgemäßen Bestandteil (C). Dies ist Beleg einer Synergie der haftungsvermittelnden Bestandteile (B) und (C) der erfindungsgemäßen Siliconelastomermasse.
Des weiteren wird anhand der Beispiele 10 und 11 gezeigt, das mit dem erfindungsgemäßen Bestandteil (C) wesentlich höhere Trennkräfte erzielt werden, als mit dem gebräuchlichsten Haftvermittler Glycidoxypropyltrimethoxysilan.
Die Beispiele 8 und 9 zeigen den zusätzlich haftungsfördernden Effekt des erfindungsgemäßen Bestandteils (E) bei Einsatz von anorganischen Substraten wie Stahl und Aluminium.

## Patentansprüche

1. Selbsthaftende additionsvernetzende Siliconzusammensetzungen, die
(A) Diorganopolysiloxane der allgemeinen Formel (1)
R¹ ₐR² _{b}SiO_{(4-a-b)/2} (1),
in der
**R**^{**1**} Hydroxylrest oder einen monovalenten, gegebenenfalls halogensubstituierten, gegebenenfalls O-, N-, S-, oder P-Atome enthaltenden Kohlenwasserstoffrest mit 1 bis 20 Kohlenstoffatomen, der frei von aliphatisch ungesättigten Gruppen ist,
**R**^{**2**} einen monovalenten, aliphatisch ungesättigten, gegebenenfalls halogensubstituierten, gegebenenfalls O-, N-, S-, oder P-Atome enthaltenden Kohlenwasserstoffrest mit 2 bis 10 Kohlenstoffatomen,
**b** Werte von 0,003 bis 2 bedeuten,
mit der Maßgabe, dass 1.5<(**a+b**)<3.0, dass pro Molekül durchschnittlich mindestens zwei aliphatisch ungesättigte Reste **R**^{**2**} enthalten sind und dass die bei 25°C bestimmte Viskosität der Diorganopolysiloxane (A) 1 mPa.s bis 40 000 Pa.s beträgt,
(B) Organohydrogenpolysiloxane der allgemeinen Formel (2)
R³ _{c}R⁴ _{d}R⁵ ₑH_{f}SiO_{(4-c-d-2e-f)/2} (2),
wobei
**R**^{**3**} einen monovalenten aliphatisch gesättigten Kohlenwasserstoffrest mit 1 bis 20 Kohlenstoffatomen,
**R**^{**4**}
(a) einen gegebenenfalls halogensubstituierten monovalenten Kohlenwasserstoffrest mit 6 bis 15 Kohlenstoffatomen, welcher mindestens einen aromatischen C₆-Ring enthält, oder
(b) einen halogensubstituierten, gegebenenfalls O-, N-, S-, oder P-Atome enthaltenden gesättigten monovalenten Kohlenwasserstoffrest mit 2 bis 20 Kohlenstoffatomen,
**R**^{**5**} einen beidseitig Si-gebundenen bivalenten, gegebenenfalls halogensubstituierten, gegebenenfalls O-, N-, S-, oder P-Atome enthaltenden Kohlenwasserstoffrest mit 6 bis 20 Kohlenstoffatomen und
**c, d, e** und **f** positive Zahlen bedeuten, mit der Maßgabe, dass die Relationen: 0,05<100 (d+e)/(c+d+e+f)<12 erfüllt sind und dass die bei 25°C bestimmte Viskosität des Organohydrogenpolysiloxans (B) 1 mPa.s bis 100 Pa.s beträgt,
(C) mindestens einen aliphatisch ungesättigten Rest und mindestens eine β-Diketon- oder β-Ketoesterfunktion aufweisende Verbindungen der allgemeinen Formel (3):
R⁷-CO-CHR⁸-CO-(O)_{g}-R⁹ (3),
wobei
**R**^{**7**} und **R**^{**9**} jeweils einen gleichen oder verschiedenen,
(a) monovalenten, aliphatisch ungesättigten, gegebenenfalls halogensubstituierten, gegebenenfalls O-, N-, S-, oder P-Atome enthaltenden Kohlenwasserstoffrest mit 2 bis 12 Kohlenstoffatomen, oder
(b) einen monovalenten aliphatisch gesättigten Kohlenwasserstoffrest mit 1 bis 20 Kohlenstoffatomen,
**R**^{**8**} Wasserstoff, oder einen
(a) monovalenten, aliphatisch ungesättigten, gegebenenfalls halogensubstituierten, gegebenenfalls O-, N-, S-, oder P-Atome enthaltenden Kohlenwasserstoffrest mit 2 bis 12 Kohlenstoffatomen, oder
(b) einen monovalenten aliphatisch gesättigten Kohlenwasserstoffrest mit 1 bis 20 Kohlenstoffatomen,
**g** die Werte 0 oder 1 bedeuten und
(D) Hydrosilylierungskatalysator enthalten.

2. Selbsthaftende additionsvernetzende Siliconzusammensetzungen nach Anspruch 1, bei denen die bei 25°C gemessene Viskosität des Bestandteils (B) 2 mPa.s bis 1 Pa.s beträgt.

3. Verfahren zur Herstellung von selbsthaftenden additionsvernetzten Siliconelastomeren, bei dem die selbsthaftenden additionsvernetzenden Siliconzusammensetzungen gemäß Anspruch 1 oder 2 auf 30 bis 250°C erwärmt werden.

4. Selbsthaftende additionsvernetzte Siliconelastomere erhältlich nach dem Verfahren gemäß Anspruch 3.

5. Verfahren zum Verbinden einer additionsvernetzenden Siliconzusammensetzung mit einem Substrat, bei dem die selbsthaftenden additionsvernetzenden Siliconzusammensetzungen gemäß Anspruch 1 oder 2 auf das Substrat aufgebracht und anschliessend durch Erwärmen auf 30 bis 250°C vernetzt werden.

6. Verbundmaterial erhältlich nach dem Verfahren gemäß Anspruch 5.

## Claims

1. Self-adhesive addition-crosslinking silicone compositions which contain
(A) diorganopolysiloxanes of the general formula (1)
R¹ ₐR² _{b}SiO_{(4-a-b)/2} (1),
in which
R¹ is a hydroxyl radical or a monovalent, optionally halogen-substituted hydrocarbon radical optionally containing O, N, S or P atoms, having 1 to 20 carbon atoms and being free of aliphatically unsaturated groups,
R² is a monovalent, aliphatically unsaturated, optionally halogen-substituted hydrocarbon radical optionally containing O, N, S or P atoms and having 2 to 10 carbon atoms,
b denotes values from 0.003 to 2,
with the proviso that 1.5<(a+b)<3.0, that ' on average at least two aliphatically unsaturated radicals R² are present per molecule and that the viscosity of the diorganopolysiloxanes (A), determined at 25°C, is 1 mPa.s to 40,000 Pa.s,
(B) organohydrogenpolysiloxanes of the general formula (2)
R³ _{c}R⁴ _{d}R⁵ ₑH_{f}SiO_{(4-c-d-2e-f)/2} (2),
in which
R³ is a monovalent aliphatically saturated hydrocarbon radical having 1 to 20 carbon atoms,
R⁴ is
(a) an optionally halogen-substituted monovalent hydrocarbon radical having 6 to 15 carbon atoms which contains at least one aromatic C₆-ring, or
(b) a halogen-substituted, saturated monovalent hydrocarbon radical optionally containing O, N, S or P atoms and having 2 to 20 carbon atoms,
R⁵ is a bivalent, optionally halogen-substituted hydrocarbon radical Si-bonded at both ends, optionally containing O, N, S or P atoms and having 6 to 20 carbon atoms and
c, d, e and f denote positive numbers, with the proviso that the relationships: 0.05<100 (d+e)/(c+d+e+f)<12 are fulfilled and that the viscosity of the organohydrogenpolysiloxane (B), determined at 25°C, is 1 mPa.s to 100 Pa.s,
(C) compounds containing at least one aliphatically unsaturated radical and at least one β-diketone or β-keto ester function, of the general formula (3):
R⁷-CO-CHR⁸-CO-(O)_{g}-R⁹ (3),
where
R⁷ and R⁹ are each an identical or different,
(a) monovalent, aliphatically unsaturated, optionally halogen-substituted hydrocarbon radical having 2 to 12 carbon atoms and optionally containing O, N, S or P atoms, or
(b) a monovalent aliphatically saturated hydrocarbon radical having 1 to 20 carbon atoms,
R⁸ is hydrogen or a
(a) monovalent, aliphatically unsaturated, optionally halogen-substituted hydrocarbon radical having 2 to 12 carbon atoms and optionally containing O, N, S or P atoms, or
(b) a monovalent aliphatically saturated hydrocarbon radical having 1 to 20 carbon atoms,
g is 0 or 1, and
(D) a hydrosilylation catalyst.

2. Self-adhesive addition-crosslinking silicone compositions according to Claim 1, in which the viscosity, measured at 25°C, of the component (B) is 2 mPa.s to 1 Pa.s.

3. Process for the preparation of self-adhesive addition-crosslinked silicone elastomers, in which the self-adhesive addition-crosslinking silicone compositions according to Claim 1 or 2 are heated to 30 to 250°C.

4. Self-adhesive addition-crosslinked silicone elastomers obtainable by the process according to Claim 3.

5. Process for bonding an addition-crosslinking silicone composition to a substrate, in which the self-adhesive addition-crosslinking silicone compositions according to Claim 1 or 2 are applied to the substrate and then crosslinked by heating to 30 to 250°C.

6. Composite material obtainable by the process according to Claim 5.

## Revendications

1. Compositions autoadhésives de silicone réticulables par addition, qui contiennent
(A) des diorganopolysiloxanes de formule générale (1)
R¹ ₐR² _{b}SiO_{(4-a-b)/2} (1)
dans laquelle
R¹ représente un radical hydroxy ou un radical hydrocarboné monovalent, éventuellement halogéné, contenant éventuellement des atomes d'O, N, S ou P, ayant de 1 à 20 atomes de carbone, qui est exempt de groupes à insaturation aliphatique,
R² représente un radical hydrocarboné monovalent à insaturation aliphatique, éventuellement halogéné, contenant éventuellement des atomes d'O, N, S ou P, ayant de 2 à 10 atomes de carbone,
b a des valeurs allant de 0,003 à 2,
étant entendu que 1,5<(a+b)<3,0, qu'au moins deux radicaux R² à insaturation aliphatique sont contenus en moyenne par molécule et que la viscosité des diorganopolysiloxanes (A), déterminée à 25°C, va de 1 mPa.s à 40 000 Pa.s,
(B) des organohydrogénopolysiloxanes de formule générale (2)
R³ _{c}R⁴ _{d}R⁵ ₑH_{f}SiO_{(4-c-d-2e-f)/2} (2)
dans laquelle
R³ représente un radical hydrocarboné aliphatique saturé ayant de 1 à 20 atomes de carbone,
R⁴ représente
(a) un radical hydrocarboné monovalent éventuellement halogéné ayant de 6 à 15 atomes de carbone, qui contient au moins un cycle aromatique en C₆, ou
(b) un radical hydrocarboné monovalent saturé halogéné ayant de 2 à 20 atomes de carbone et contenant éventuellement des atomes d'O, N, S ou P,
R⁵ représente un radical hydrocarboné bivalent lié à Si des deux côtés, éventuellement halogéné, ayant de 6 à 20 atomes de carbone et contenant éventuellement des atomes d'O, N, S ou P, et
c, d, e et f représentent des nombres positifs, étant entendu que les relations : 0,05<100 (d+e)/(c+d+e+f)<12 sont satisfaites et que la viscosité de l'organohydrogénopolysiloxane (B), déterminée à 25°C, va de 1 mPa.s à 100 Pa.s,
(C) des composés comportant au moins un radical insaturé aliphatique et au moins une fonction β-dicétone ou β-cétoester, de formule générale (3) :
R⁷-CO-CHR⁸-CO-(O)_{g}-R⁹ (3),
dans laquelle
R⁷ et R⁹ représentent chacun un radical, identique ou différent,
(a) hydrocarboné monovalent, à insaturation aliphatique, éventuellement halogéné ayant de 2 à 12 atomes de carbone et contenant éventuellement des atomes d'O, N, S ou P,
(b) un radical hydrocarboné monovalent saturé aliphatique ayant de 1 à 20 atomes de carbone,
R⁸ représente un atome d'hydrogène ou
(a) un radical hydrocarboné monovalent, à insaturation aliphatique, éventuellement halogéné, ayant de 2 à 12 atomes de carbone et contenant éventuellement des atomes d'O, N, S ou P, ou
(b) un radical hydrocarboné monovalent saturé aliphatique ayant de 1 à 20 atomes de carbone,
g a la valeur 0 ou 1, et
(D) un catalyseur d'hydrosilylation.

2. Compositions autoadhésives de silicone réticulables par addition selon la revendication 1, dans lesquelles la viscosité du composant (B), mesurée à 25°C, va de 2 mPa.s à 1 Pa.s.

3. Procédé pour la préparation d'élastomères silicone autoadhésifs, réticulables par addition, dans lequel les compositions autoadhésives de silicone, réticulables par addition, selon la revendication 1 ou 2, sont chauffées à 30-250°C.

4. Elastomères silicone autoadhésifs réticulables par addition, pouvant être obtenus par le procédé selon la revendication 3.

5. Procédé pour l'assemblage d'une composition de silicone, réticulable par addition, avec un support, dans lequel les compositions autoadhésives de silicone réticulables par addition, selon la revendication 1 ou 2, sont appliquées sur le support et ensuite réticulées par chauffage à 30-250°C.

6. Matériau composite pouvant être obtenu par le procédé selon la revendication 5.
